**Europäisches Patentamt**

**European Patent Office** .

**Office européen des brevets**

(19)

(11) Veröffentlichungsnummer: **0 229 625**

**A2**

(12) # EUROPÄISCHE PATENTANMELDUNG

(21) Anmeldenummer: **87100082.4**

(22) Anmeldetag: **07.01.87**

(51) Int. Cl.³: **B 61 D 33/00**
**B 60 N 1/00**

(30) Priorität: **09.01.86 DE 3600414**

(43) Veröffentlichungstag der Anmeldung:
**22.07.87 Patentblatt 87/30**

(84) Benannte Vertragsstaaten:
**AT BE CH DE ES FR GB GR IT LI LU NL SE**

(71) Anmelder: **Paulisch KG**
**Eisenbahnstrasse 17**
**D-8770 Lohr am M.(DE)**

(72) Erfinder: **Mankiewicz, Dieter**
**Hirschweg 1**
**D-8770 Lohr a.M.(DE)**

(74) Vertreter: **Eyer, Eckhardt Philipp, Dipl.-Ing.**
**Patentanwälte Eyer & Linser Robert-Bosch-Strasse 12a**
**D-6072 Dreieich(DE)**

(54) **Fahrzeugsitz für öffentliche Verkehrsmittel.**

(57) Fahrzeugsitz für öffentliche Verkehrsmittel, insbesondere Eisenbahnabteile mit einem bodenfesten Sitzuntergestell (1) und einer starren, aus Sitzteil (2) und Rückenteil (3) bestehenden Sitzschale, die mit Hilfe eines schwenkbaren Trägers (4) auf dem Sitzuntergestell gehalten und mit seiner Hilfe aus einer Sitzlage in eine Liegelage verschwenkt werden kann. Der Sitz weist einen der Herstellung einer Verbindung zum Sitzuntergestell dienenden Funktionsträger (5) auf, der als Träger für die ihrerseits bausatzartig austauschbar mit einem Polster (6), einem Kopfteil (7) sowie einer Armlehne (8) versehene Sitzschale dient. Der Funktionsträger (5) ist (konkav) nach unten wölbenden Langlochführungen (9) versehen, in denen der Funktionsträger (5) auf gestellfesten Führungszapfen (10) geführt ist, wobei der das Funktionsteil (5) tragende Schwenkarm (11) in der Sitzlage des Fahrzeugsitzes eine geringfügig gegen die Vertikale nach vorn geneigte Stellung einnimmt. das Sitzteil zweiteilig aus einem Gesäßteil (2) und einem mit diesem mittels Gelenkachse (12) gelenkig verbundenen Schenkelteil (13) ausgebildet und das Schenkelteil (13) mit einem als Betätigungshebel zur Abschwenkung gegenüber dem Gesäßteil wirkenden Arm (14) versehen ist, der mit seinem anderen Ende in einer sich nach Art eines Kreisabschnittes (konvex) nach oben wölbenden Langlochführung (15) geführt ist.

EP 0 229 625 A2

FIG.4

Die Erfindung bezieht sich auf ein Sitzsystem für öffentliche Verkehrsmittel, insbesondere Eisenbahnabteile mit einem bodenfesten Sitzuntergestell und einem aus Sitzteil und Rückenteil bestehenden, mit einem Funktionsträger versehenen Sitz, der mit Hilfe von schwenkbaren Trägern auf dem Sitzuntergestell gehalten und auf diesem in Sitzlängsrichtung verschwenkt werden kann.

In den öffentlichen Nahverkehrs- und Fernverkehrsmitteln, wie Eisenbahn-, S-Bahn-, U-Bahnwagen ebenso wie in den öffentlichen Omnibusfahrzeugen spielen die hohe Beanspruchung des Materials und die dadurch bedingte große Verschmutzung sowie der große Verschleiß eine immer größere Rolle in den Überlegungen und Kalkulationen. Die Wartung des in den Fahrgasträumen installierten Inventars von der täglichen Reinigung bis hin zur Erneuerung schadhaft gewordener und teilweise mutwillig zerstörter Teile verursacht bei den bisher bekannten Sitzen, die aus in allen Einzelteilen kompakt hergestellten und fest miteinander verbundenen Elementen bestehen und in ihrer Gesamtheit gestellfest im Abteil bzw. Fahrgastraum montiert sind, einen erheblichen Aufwand. Die gestellfeste Montage der Sitze erschwert den Zugang zu den unter und hinter den Sitzen gelegenen Räumen und damit den Reinhaltungsaufwand, die kompakte Herstellung der Elemente und deren feste Verbindung miteinander erschwert einerseits ebenfalls die Reinigung verschmutzter Teile, insbesondere andererseits jedoch den Austausch schadhaft gewordener Teile, so daß - etwa in den öffentlichen Schienenverkehrsmitteln - regelmäßig eine Reparatur mit fliegendem Personal nicht möglich sondern eine Überstellung des Wagens in die Werkstatt erforderlich ist. Hinzu kommt, daß durch die sehr kompakte Herstellung der Elemente auch bei nur kleineren Schäden größere Teile entfernt und verworfen werden müssen, die keinerlei Schäden aufweisen. Es wird daher in verstärktem Maße die Forderung nach einer konstruktiven Vereinfachung der insbesondere in öffentlichen Verkehrsmitteln eingesetzten Sitze erhoben mit dem Ziel eine einfache Reinigung und Wartung sowie einen einfachen Austausch schadhaft gewordener Teile mit einfachem Bordwerkzeug zu ermöglichen.

Hinzu kommt zur Erhöhung der Bequemlichkeit der Fahrgäste der Wunsch nach einer Abschwenkbarkeit des Sitzes aus einer Sitzstellung in eine Liegelage, wobei durch das Abschwenken eine weitere Ausladung des Sitzes nach hinten nicht verursacht werden soll. Dies gilt insbesondere für Abteilsitze von beispilesweise Eisenbahnwagen, die in ihrer Sitzlage aus Platzgründen an der Abteilwand oder einer Abteilzwischenwand anliegen, die eine feste Begrenzung beim Abschwenken des Sitzes bilden. Hierbei wird es von dem Benutzer als besonders angenehm angesehen, wenn sich das Abschwenken quasi in einer Ebene, d.h. ohne Anheben der Oberschenkelpartie des Körpers über die Sitzebene hinaus vollzieht. Die bekanten Sitze mit starr miteinander verbundenen Sitz- und Rückenteilen vermögen diese sich im Wesentlichen widersprechenden Forderungen nicht zu erfüllen.

Ziel der vorliegenden Erfindung ist die Schaffung eines diesen Forderungen genügenden Fahrzeugsitzes und die Erfindung besteht darin, daß der Sitz von einem der Herstellung einer Verbindung zum Sitzuntergestell dienenden Funktionsträger gebildet ist, der als Träger für die ihrerseits bausatzartig austauschbar mit einem Polster, einem Kopfteil sowie einer Armlehne versehene Sitzschale dient.

Durch die Erfindung ist ein Fahrzeugsitz geschaffen, bei dem aufgrund der baukastenartigen Bauweise einerseits der Zugang zu den unter und hinter den Sitzen gelegenen Räumen und damit der Reinhaltungsaufwand und andererseits eine konstruktive Vereinfachung erzielt wird, die die Wartung sowie vereinfacht und den Austausch schadhaft gewordener Teile mit einfachem Bordwerkzeug ermöglicht. Der neue Sitz erlaubt darüberhinaus das Abschwenken aus einer Sitzstellung in eine Liegelage ohne weitere Ausladung nach hinten, wobei sich das Abschwenken quasi in einer Ebene, d.h. ohne Anheben der Oberschenkelpartie des Körpers über die Sitzebene hinaus vollzieht.

Zu diesem Zweck ist vorteilhaft der Funktionsträger in seinem gegen die vordere Sitzkante weisenden Ende mit sich nach Art eines Kreisabschnittes (konkav) nach unten wölbenden Langlochführung versehen, in denen der Funktionsträger auf gestellfesten Führungszapfen geführt ist, wobei der Funktionsträger an seinem im Bereich der Rückenlehne gelegenen Ende mit einem derart am Sitzuntergestell angelenkten Schwenkarm versehen ist, daß er in der Sitzlage des Fahrzeugsitzes eine geringfügig gegen die Vertikale nach vorn geneigte Stellung einnimmt. Hierbei kann in einer besonders vorteilhaften Ausführungsform das Sitzteil zweiteilig aus einem Gesäßteil und einem mit diesem gelenkig verbundenen Schenkelteil bestehen und das Schenkelteil an einem als Betätigungshebel zur Abschwenkung gegenüber dem Gesäßteil wirkenden Arm mit einer Lasche versehen sein, die mit ihrem anderen Ende in einer sich nach Art eines Kreisabschnittes nach oben wölbenden Langlochführung geführt ist.

Die Erfindung ist in der Zeichnung anhand eines Ausführungsbeispieles erläutert. Es zeigen

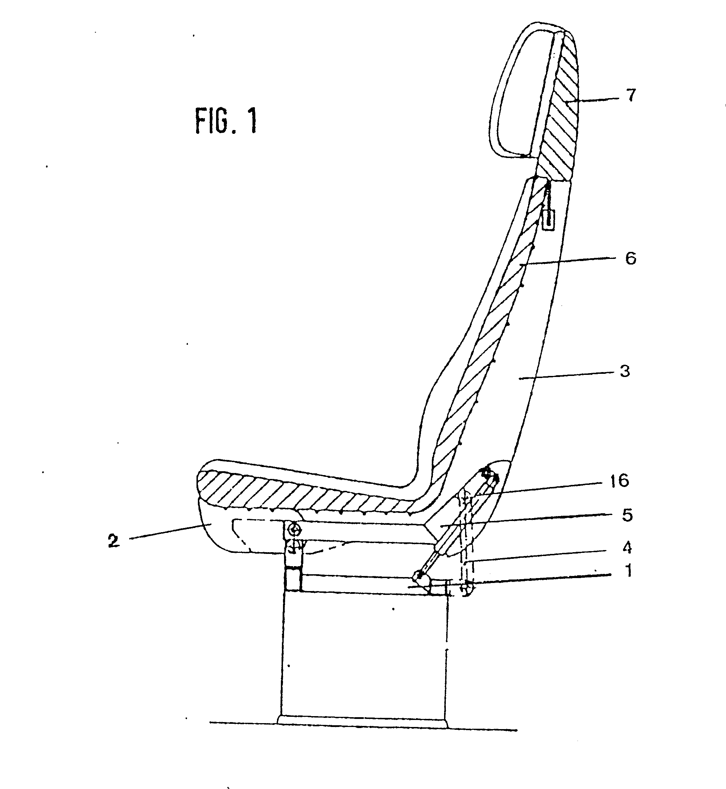

Fig. 1    eine Seitenansicht eines Fahrzeugsitzes gemäß der Erfindung

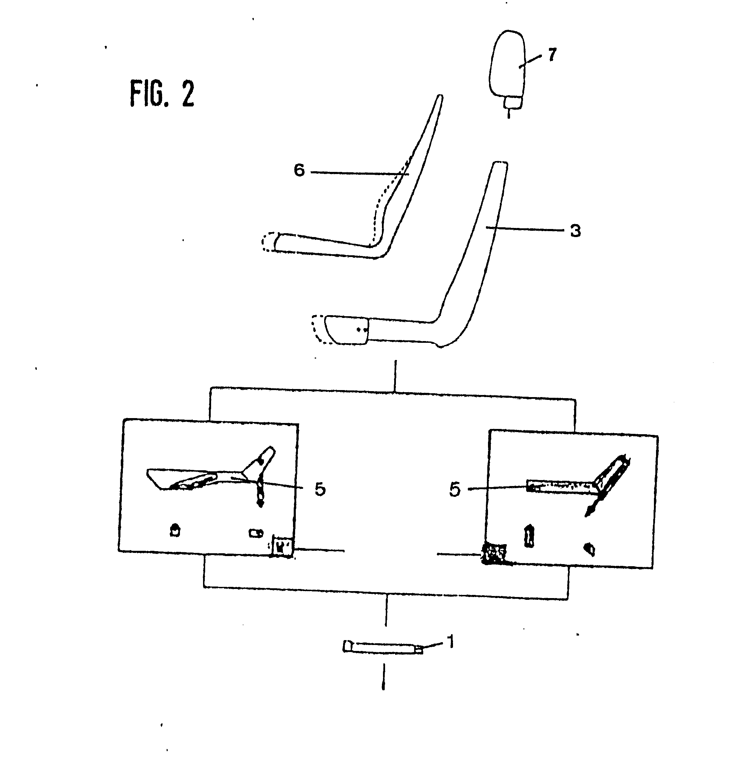

Fig. 2    eine Sprengdarstellung des in Fig. 1 wiedergegebenen Sitzes

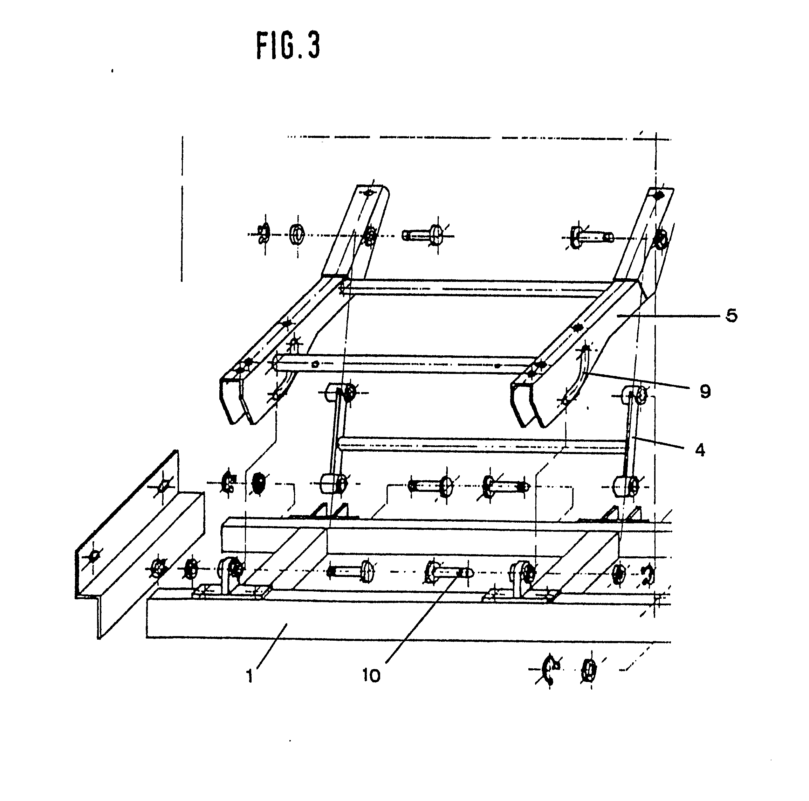

Fig. 3    eine Sprengdarstellung des Untergestells mit Funktionsträger

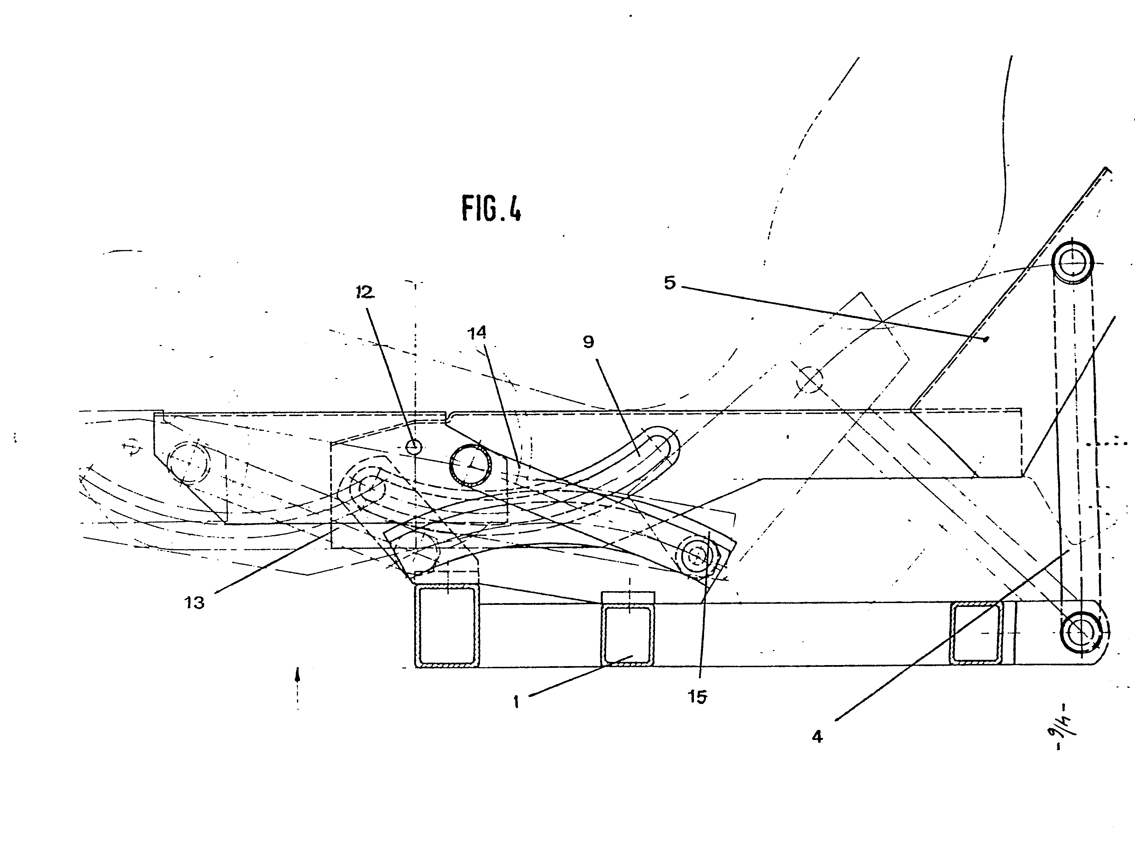

Fig. 4    eine Seitenansicht des Sitzes im Bereich des Funktionsträgers

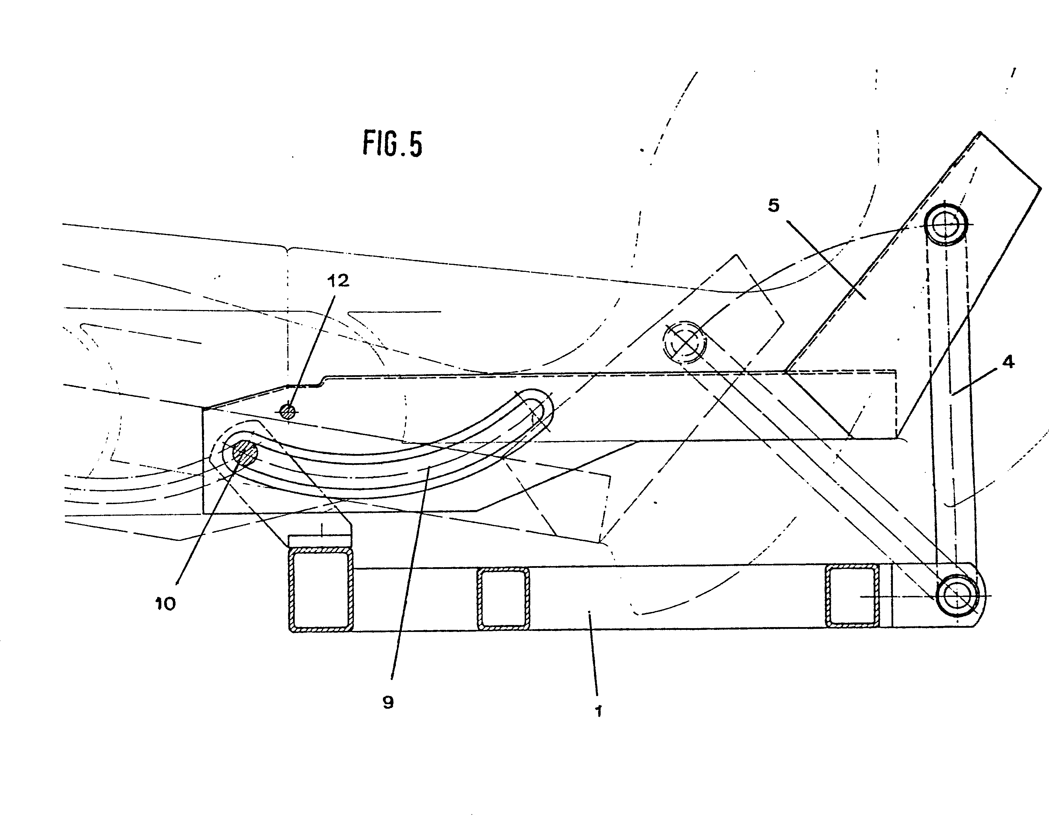

Fig. 5    eine der Fig. 4 entsprechende Teildarstellung der Horizontalführung der Abklappeinrichtung

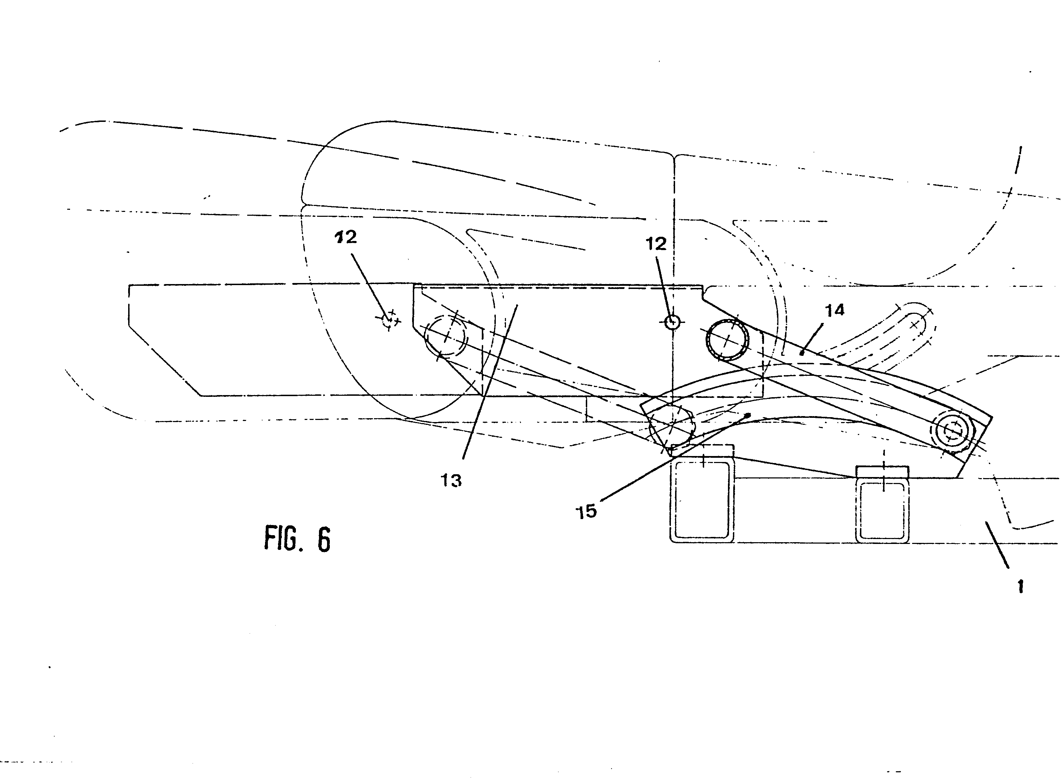

Fig. 6    eine der Fig. 4 entsprechende Teildarstellung der Betätigungseinrichtung für die Schenkelauflage

Der in der Zeichnung wiedergegebene Fahrzeugsitz für öffentliche Verkehrsmittel, insbesondere Eisenbahnabteile besteht aus einem bodenfesten Sitzuntergestell 1 und einer starren, aus Sitzteil 2 und einem Rückenteil 3 gebildeten Sitzschale, die mit Hilfe eines schwenkbaren Trägers 4 auf dem Sitzuntergestell gehalten und mit seiner Hilfe aus einer Sitzlage in eine Liegelage verschwenkt werden kann. Der Sitz weist einen der Herstellung einer Verbindung zum Sitzuntergestell dienenden Funktionsträger 5 auf der als Träger für die ihrerseits bausatzartig austauschbar mit einem Polster 6, einem Kopfteil 7 sowie einer Armlehne 8 versehene Sitzschale dient. Die Anordnung erlaubt eine Grundstellung der Lehne zwischen mindestens 20° und 25° und einer Endstellung zwischen mindestens 26° und 34°, eine Sitzstellung zwischen mindestens 7° und 13° bzw. 16° und einen Verstellbereich zwischen 6° und 9°.

Der Funktionsträger 5 ist in seinem gegen die vordere Sitzkante weisenden Bereich mit sich nach Art eines Kreisabschnittes konkav nach unten wölbenden Langlochführungen 9 versehen, in denen der Funktionsträger 5 auf gestellfesten Führungszapfen 10 geführt ist, wobei der Funktionsträger 5 an seinem im Bereich der Rückenlehne 3 gelegenen Ende mit einem derart am Sitzuntergestell 1 angelenkten Schwenkarm 4 versehen ist, daß er in der Sitzlage des Fahrzeugsitzes eine geringfügig gegen die Vertikale nach vorn geneigte Stellung einnimmt. Das Sitzteil ist zweiteilig aus einem Gesäßteil 2 und einem mit diesem mittels Gelenkachse 12 gelenkig verbundenen Schenkelteil 13 ausgebildet und das Schenkelteil 13 mit einem als Betätigungshebel zur Abschwenkung gegenüber dem Gesäßteil wirkenden Arm 14 versehen, der mit seinem anderen Ende in einer sich nach Art eines Kreisabschnittes gegeläufig zu der den Funktionsträger führenden Langlochführung konvex nach oben wölbenden Langlochführung 15 geführt ist.

Die Herstellung der Rückenlehnenneigung erfolgt durch Betätigung eines - in der Zeichnung nicht dargestellten - Auslösehebels an der Armlehne und durch Gewichtsverlagerung gegen die Wirkung der das Sitzgewicht austarierenden Gasdruckfeder 16, wobei sich die Sitzpolsterkante bei gleichbleibender Höhe nach vorne schiebt und sich die Hinterkante der Rückenlehne auf quasi einer geraden nach unten bewegt. Diese Wirkung wird dadurch erreicht, daß der Gesäßteil 2 in seinem vorderen Bereich aufgrund der Führung in der konkaven Langlochführung 9 parallel zu der durch das Abschwenken des Schwenkarmes 11 verursachten Absenkung des hinteren Sitzteiles absenkt, wobei gleichzeitig unter der Wirkung des in der Langlochführung 15 gegenläufig gesteuerten Betätigungsarmes 14 ein Abschwenken des Schenkelteils 13 gegenüber dem Gesäßteil 2 erfolgt. Erst im weiteren Verlauf erfolgt das erneute Anheben der Sitzfläche im Verhältnis zu dem sich weiterhin bis in seine Endstellung absenkenden Rückenteil.

Patentansprüche

1. Fahrzeugsitz für öffentliche Verkehrsmittel, insbesondere Eisenbahnabteile mit einem bodenfesten Sitzuntergestell (1) und einer starren, aus Sitzteil (2) und Rückenteil (3) bestehenden Sitzschale, die mit Hilfe eines schwenkbaren Trägers (4) auf dem Sitzuntergestell gehalten und mit seiner Hilfe aus einer Sitzlage in eine Liegelage verschwenkt werden kann, dadurch gekennzeichnet, daß der Sitz einen der Herstellung einer Verbindung zum Sitzuntergestell dienenden Funktionsträger (5) aufweist, der als Träger für die ihrerseits bausatzartig austauschbar mit einem Polster (6), einem Kopfteil (7) sowie einer Armlehne (8) versehene Sitzschale dient.

2. Fahrzeugsitz nach Anspruch 1, dadurch gekennzeichnet, daß der Funktionsträger (5) in seinem gegen die vordere Sitzkante weisenden Bereich mit sich nach Art eines Kreisabschnittes (konkav) nach unten wölbenden Langlochführungen (9) versehen ist, in denen der Funktionsträger (5) auf gestellfesten Führungszapfen (10) geführt ist, wobei der Funktionsträger (5) an seinem im Bereich der Rückenlehne (3) gelegenen Ende mit einem derart am Sitzuntergestell (1) angelenkten Schwenkarm (11) versehen ist, daß er in der Sitzlage des Fahrzeugsitzes eine geringfügig gegen die Vertikale nach vorn geneigte Stellung einnimmt.

3. Sitzsystem nach Anspruch 2, dadurch gekennzeichnet, daß das Sitzteil zweiteilig aus einem Gesäßteil (2) und einem mit diesem mittels Gelenkachse (12) gelenkig verbundenen Schenkelteil (13) ausgebildet und das Schenkelteil (13) mit einem als Betätigungshebel zur Abschwenkung gegenüber dem Gesäßteil wirkenden Arm (14) versehen ist, der mit seinem anderen Ende in einer sich nach Art eines Kreisabschnittes (konvex) nach oben wölbenden Langlochführung (15) geführt ist.

FIG. 1

FIG. 2

**FIG.3**

# FIG.4

0229625

-4/6-

FIG.5

FIG. 6

12　12　14　13　15　1

9/9

0229625